# EUROPEAN PATENT APPLICATION

(11) **EP 4 321 067 A1**
(43) Date of publication of application: **14.02.2024**
(21) Application number: 22215438.7
(22) Date of filing: 21.12.2022
(51) Int. Cl.: A47J 31/44, A47J 31/06

(54) **WATER DISTRIBUTING DEVICE FOR COFFEE MACHINE**

(30) Priority: 12.08.2022 TW 111130446
(71) Applicant: I Cherng Refrigeration Industrial Co., Ltd., 83164 Kaohsiung City (TW)
(72) Inventor: Hsueh, Po-Yang, 83164 Kaohsiung City (TW)
(74) Representative: Cohausz & Florack

(57) **Abstract**

A water distributing device is adapted for use in a coffee machine, and includes a body housing (3) and a round-contoured flow channel unit (4). The body housing (3) includes a bottom wall (31) and a surrounding wall (32) cooperatively defining a water entry space (300). The bottom wall (31) has a water intake (310) passing therethrough along a central axis (Z). The flow channel unit (4) is disposed downstream of the body housing (3), and defines a plurality of water guide channels (40). Each water guide channel (40) extends away from the central axis (Z) in a radial direction (R) perpendicular to the central axis (Z), is curved in a tangential direction (T) perpendicular to the central axis (Z) and the radial direction (R), and has a water outlet (401) located away from the central axis (Z).

## Description

The disclosure relates to a device of a coffee machine, more particularly to a water distributing device adapted for use in a coffee machine.

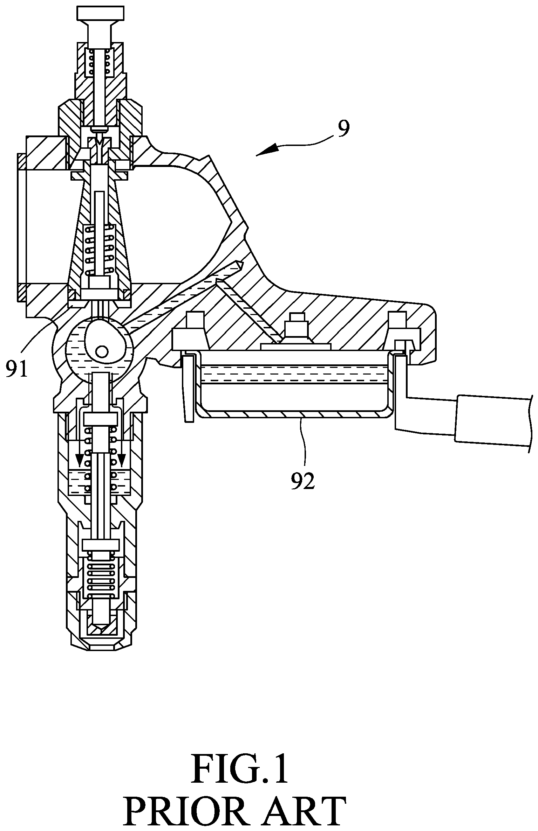

Referring to Figure 1, a conventional coffee machine 9 includes a water supply unit 91 for supplying water for brewing coffee, and a coffee brewing unit 92 detachably mounted to the water supply unit 91 for containing coffee powder to be brewed. The water supply unit 91 can provide water with the water temperature, volume, and even the water pressure parameters appropriate for brewing, so as to extract coffee according to specific brewing requirements. However, in order to achieve the desired adjustments, the water supply unit 91 utilizes a complicated mechanical mechanism to adjust the parameters of the brewing water. Hence, the coffee machine 9 is relatively bulky due to the complicated mechanism, which may be inconvenient for users.

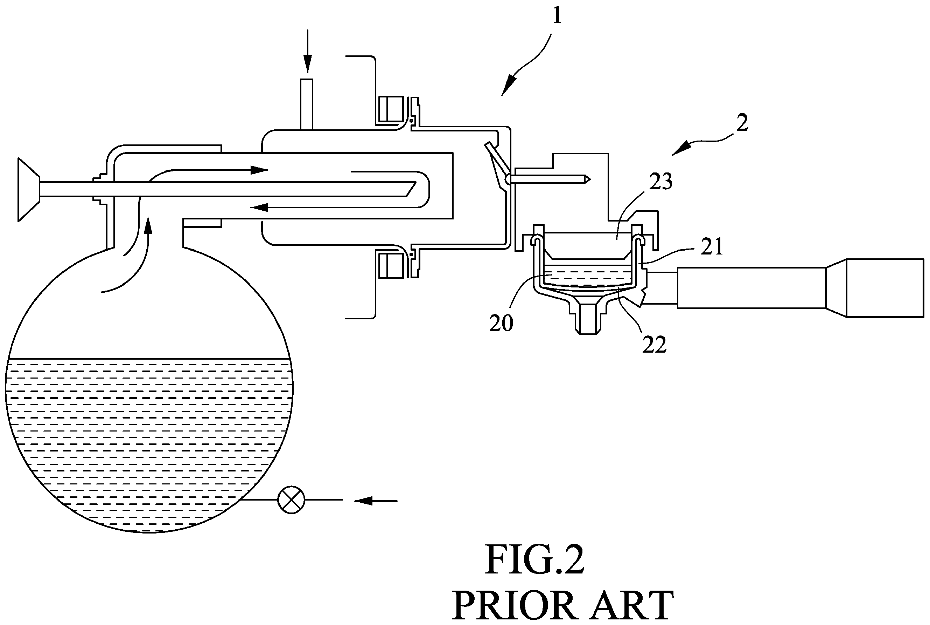

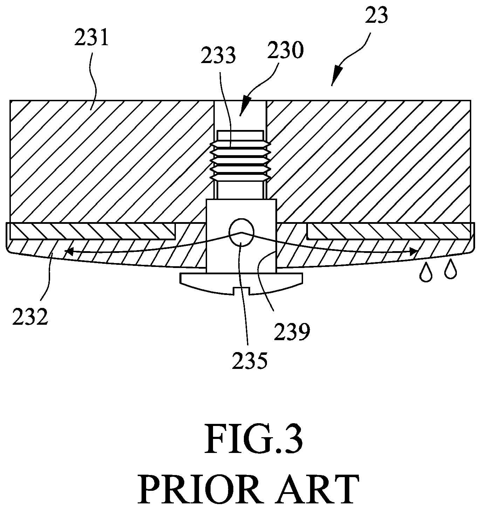

Referring to Figure 2, another conventional coffee machine includes a water intake unit 1 for introducing brewing water from a water source and a brewing unit 2 connected downstream to the water intake unit 1. The brewing unit 2 includes a main body 21 surrounding and defining an internal space 20, a coffee powder filter basket 22 placed in the internal space 20 for containing coffee powder brewing, and a water distribution module 23 that is arranged upstream of the coffee powder basket 22, and that can adjust the parameters of the brewing water according to user specifications. Referring to Figure 3 in conjunction with Figure 2, the water distributing module 23 includes a plate body 231 that defines a water intake hole 230, a water outlet mesh 232 that is fixed on the side of the plate body 231 opposite to the water intake unit 1 and that is formed with a through opening 239, and a fastening bolt 233 that is inserted through the through opening 239 and the water intake hole 230 and that has a traverse water outlet hole 235. The fastening bolt 233 is threaded into the water intake hole 230 to fasten the water outlet mesh 232 with the plate body 231. The water will flow from the water outlet hole 235 into the coffee powder basket 22 through the water outlet mesh 232.

However, the water distributing module 23 distributes water through the water outlet mesh 232, which means that the water will need to flow through numerous pores of the water outlet mesh 232 (not shown in the Figures), causing the water flow to be constricted to a downward drip. Therefore, the coffee powder in the coffee filter powder basket 22 cannot be stirred or agitated by the water flow. In other words, the flow of the brewing water can only provide an insubstantial downward force, instead of creating a stirring effect that can fully release the coffee flavor. In addition, after the brewing is complete, part of the brewing water remains in the coffee powder filter basket 22, so when the pressure from the conventional coffee machine is ceased, the coffee grounds carried by the remaining water may reverse seep through the water outlet mesh 232. If the pores of the water outlet mesh 232 are clogged by the used coffee grounds, the coffee machine will be difficult to clean, and when the water distributing module 23 is used for subsequent brewing, the coffee grounds that are clogged in the water outlet mesh 232 from previous brewings might impact the taste of the brewed coffee. Therefore, there is a bona fide need for improvement.

Therefore, the object of the disclosure is to provide a water distributing device for coffee machine that can provide a uniformly stirred water flow for brewing.

According to the disclosure, the water distributing device is adapted for use in a coffee machine, and includes a body housing and a round-contoured flow channel unit. The body housing includes a bottom wall and a surrounding wall. The bottom wall has a water intake passing therethrough along a central axis. The surrounding wall extends from a periphery of the bottom wall and cooperates with the bottom wall to define a water entry space. The flow channel unit is disposed downstream of the body housing, and defines a plurality of water guide channels that are in fluid communication with the water intake. Each water guide channel extends away from the central axis in a radial direction that is perpendicular to the central axis, is curved in a tangential direction that is perpendicular to the central axis and the radial direction, and has a water outlet that is located away from the central axis.

Other features and advantages of the disclosure will become apparent in the following detailed description of the embodiments with reference to the accompanying drawings, of which:
Figure 1 is a partially cross-sectional view of a conventional coffee machine;
Figure 2 is a schematic diagram illustrating another conventional coffee machine;
Figure 3 is a partially cross-sectional view of a water distributing module of the conventional coffee machine as shown in Figure 2;
Figure 4 is a partially exploded perspective view of a first embodiment of a water distributing device for coffee machine according to the disclosure;
Figure 5 is a fragmentary partially cross-sectional view of the first embodiment when assembled in a coffee machine for brewing;
Figure 6 is a bottom view illustrating a bottom wall of a body housing of the first embodiment;
Figure 7 is an exploded perspective view of the flow channel unit of the first embodiment;
Figure 8 is a top view of a configuration plate of the flow channel unit of the first embodiment;
Figure 9 is a side view of the first embodiment;
Figure 10 is a partial cross-sectional view of the first embodiment;
Figure 11 is an exploded perspective view of a flow channel unit of a second embodiment of the water distributing device; and
Figure 12 is a top view of the flow channel unit of the second embodiment, which has a plurality of guide arms.

Before the present invention is described in greater detail, it should be noted that where considered appropriate, reference numerals have been repeated among the figures to indicate corresponding or analogous elements, which may optionally have similar characteristics.

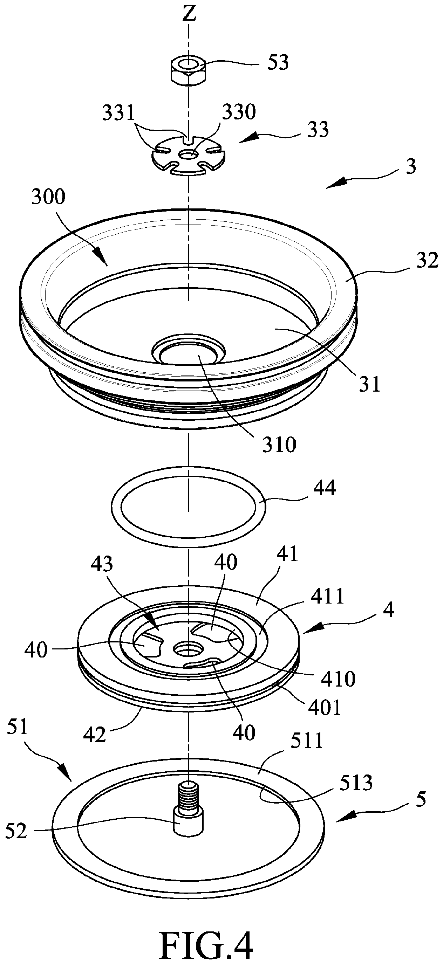

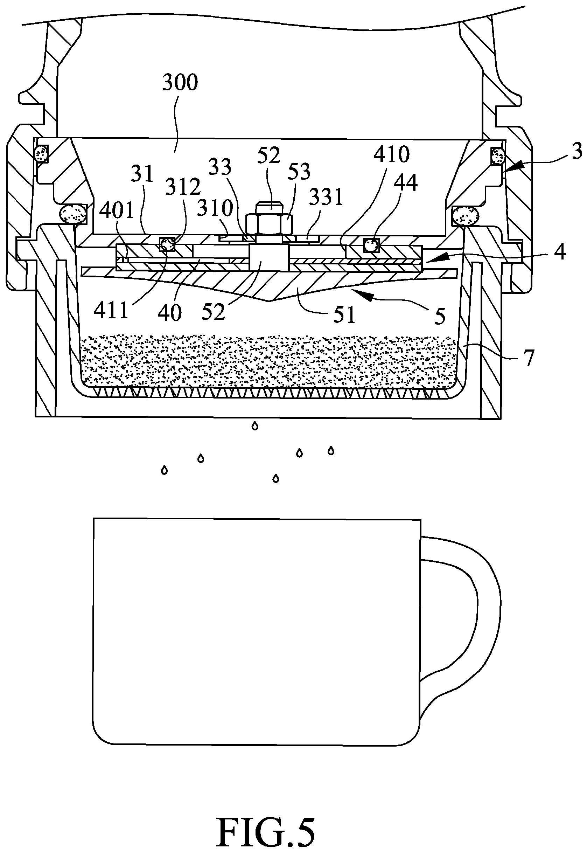

As shown in Figure 4, the first embodiment of the water distributing device according to the present disclosure includes a body housing 3, a round-contoured flow channel unit 4 disposed downstream of the body housing 3, and a mounting unit 5 positioned downstream of the flow channel unit 4. Referring to Figure 5 in conjunction with Figure 4, the first embodiment is adapted to be installed in a coffee machine with a pressurized water supply mechanism. The coffee machine includes an upstream water supply device (not shown) for supplying brewing water with high pressure, and a downstream coffee powder filter basket 7 for containing coffee powder. The brewing is performed when the brewing water flow through the first embodiment of the water distributing device. It is noted that the water supply and the structure of the coffee powder filter basket 7 are not the salient features of the present disclosure, and their precise details will not be further elaborated in the following.

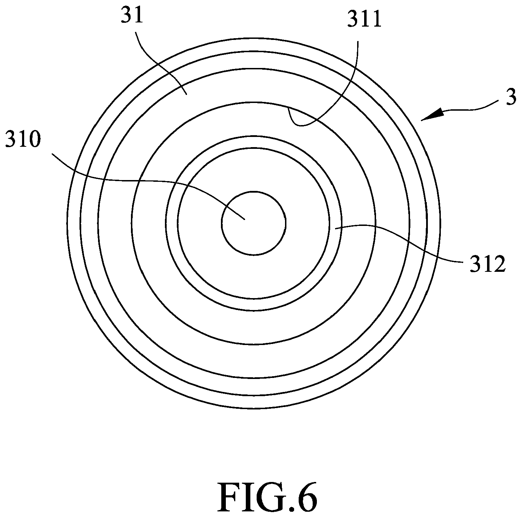

The body housing 3 includes a bottom wall 31 that has a water intake 310 passing therethrough along a central axis (Z), a surrounding wall 32 extending from a periphery of the bottom wall 31 and cooperating with the bottom wall 31 to define a water entry space 300, and a flow splitting piece 33 engaged in the water intake 310. As shown in Figures 5 and 6, the bottom wall 31 further has a first engaging recess 311 that is formed in a side thereof opposite to the water entry space 300 and that is engaged with the flow channel unit 4, and a first annular groove 312 that is formed in a side thereof opposite to the water entry space 300 and that surrounds the water intake 310. The flow splitting piece 33 has a through hole 330 extending through the center thereof and is in fluid communication with the water guide channels 40, and a plurality of slots 331 formed along a circumference thereof, being equiangularly spaced apart from one another, and surrounding the through hole 330. As such, the brewing water introduced into the water entry space 300 can enter the water intake 310 through the slots 331 of the flow splitting piece 33 and be delivered downward.

Referring to Figures 4 to 6, the flow channel unit 4 defines a plurality of water guide channels 40 in fluid communication with the water intake 310. The flow channel unit 4 includes a cover plate 41 abutting against a lower side of the bottom wall 31 of the body housing 3, a bottom plate 42 disposed under the cover plate 41, at least one flow channel configuration member 43 disposed between the cover plate 41 and the bottom plate 42 and cooperating with the cover plate 41 and the bottom plate 42 to define the water guide channels 40, and a water sealing ring 44 positioned between the body housing 3 and the flow channel unit 4 to form a watertight seal therebetween. The cover plate 41 defines a water dispensing port 410 disposed between and in fluid communication with the water intake 310 and the water guide channels 40, and has a second annular groove 411 surrounding the dispensing port 410, formed in a side thereof that faces the bottom wall 31, and be in registration with the first annular groove 312. The water sealing ring 44 is disposed within the first annular groove 312 and the second annular groove 411 (i.e., the water sealing ring 44 is positioned between the bottom wall 31 of the body housing 3 and the cover plate 41 of the flow channel unit 4). Thus, the watertight seal for the brewing water directed from the water intake 310 to the water dispensing port 410 is established.

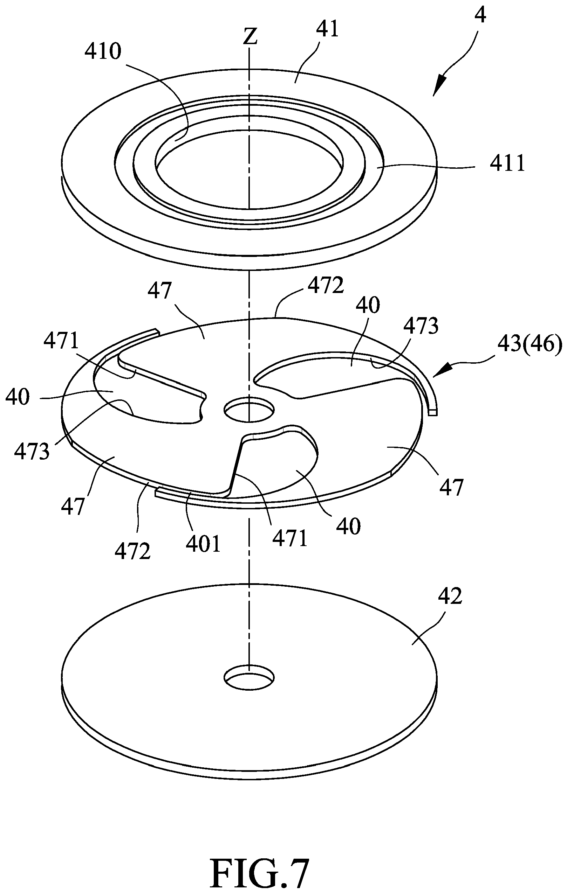

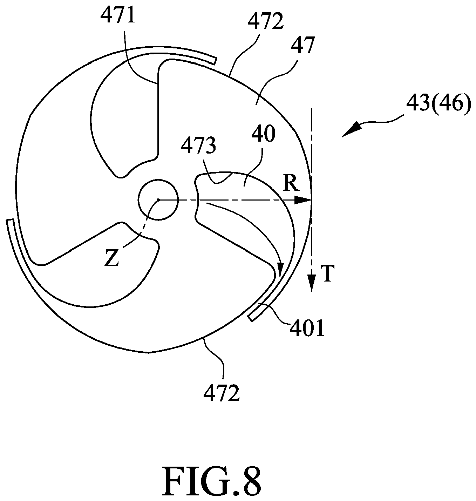

Referring to Figure 7 in conjunction with Figure 4, the at least one channel configuration member 43 is a configuration plate 46 having three hook sections 47 that are disposed around the central axis (Z) to define the water guide channels 40. Specifically, each hook section 47 is roughly fan-shaped and has a side edge 471 that extends radially outward from the center of the configuration plate 46, an outer curved edge 472 that extends from an outer end of the side edge 471 along a circumference of the configuration plate 46, and an inner curved edge 473 extending from an end of the outer curved edge 472 opposite to the side edge 471 toward the center of the configuration plate 46, and cooperating with the side edge 471 of an adjacent hook section 47 to define one of the water guide channels 40. As shown in Figure 8, each water guide channel 40 extends away from the central axis (Z) in a radial direction (R) perpendicular to the central axis (Z), and is curved in a tangential direction (T) perpendicular to both the central axis (Z) and the radial direction (R). When the water flow enters each water guide channel 40, it is directed outward in the radial direction (R) and at the same time in the tangential direction (T), under guidance of the inner curved edges 473 of the hook sections 47. Moreover, each water guide channel 40 has a water outlet 401 that is located away from the central axis (Z) and formed between the inner curved edge 473 of a respective one of the hook sections 47 and the outer curved edge 472 of an adjacent one of the hook sections 47. Due to the tangentially directed flow and the pressure drop when the brewing water flows downwardly, the water flow output from the water outlet 401 will create a vortex flow circulating downward around the center axis (Z).

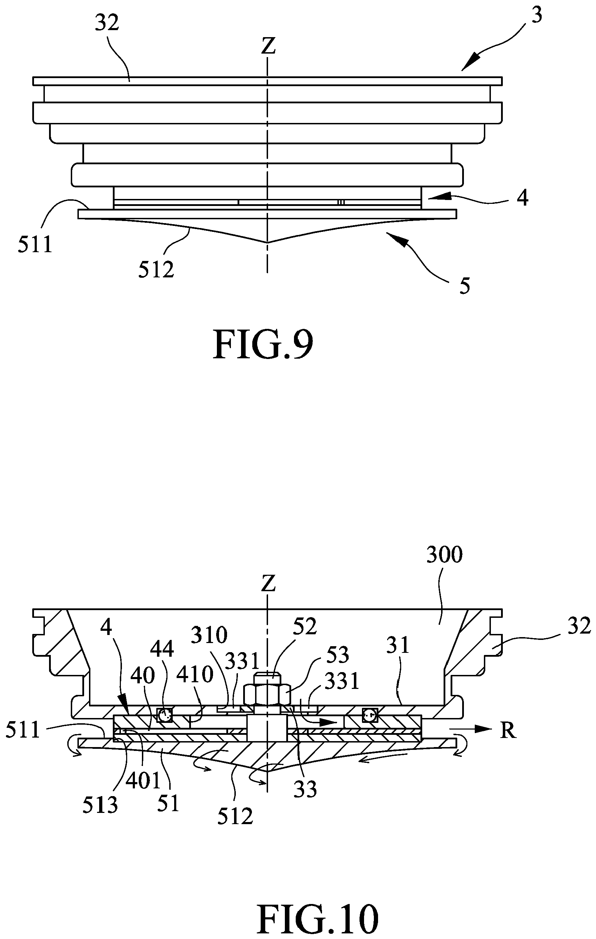

Referring to Figure 9 in conjunction with Figure 4, the mounting unit 5 includes a flow draining plate 51, a bolt 52 protruding from the flow draining plate 51 through the water intake 310 into the water entry space 300, and a threaded component 53 connected threadedly to the bolt 52 and restraining the flow channel unit 4 between the flow draining plate 51 and the bottom wall 31. The flow draining plate 51 includes a top surface 511 facing the flow channel unit 4, a conical bottom surface 512 connected to a periphery of the top surface 511 and tapering downwardly, and a second engaging recess 513 formed in the top surface 511 and engaged with the flow channel unit 4. In this embodiment, the threaded component 53 is a nut.

During assembling of the first embodiment, the bolt 52 of the mounting unit 5 should first pass sequentially through the water dispensing port 410 of the flow channel unit 4 and the water intake 310 of the body housing 3, and then through the through hole 330 of the flow splitting piece 33 engaged in the water intake 310. Afterward, the threaded component 53 is screwed downwardly onto the bolt 52 from the top of the bolt 52 to abut with the flow splitting piece 33, such that the bottom wall 31 of the body housing 3 and the flow draining plate 51 of the mounting unit 5 clamps the flow channel unit 4 on opposite ends along the central axis (Z), thus the assembling of the first embodiment is completed. By virtue of the top and bottom portions of the flow channel unit 4 being retained respectively in the first engaging recess 311 and the second engaging recess 513, the flow channel unit 4 can be held stably in radial directions, and the body housing 3, the flow channel unit 4, and the mounting unit 5 can be precisely aligned with one another.

Referring to Figure 10 in conjunction with Figures 5 and 8, when using the first embodiment to brew coffee, the brewing water, which is pressurized upstream and introduced into the water entry space 300, will flow through the slots 331 and the water intake 310, and then enter the flow channel unit 4. Subsequently, the brewing water will be evenly introduced into each water guide channel 40 through the water dispensing port 410. The brewing water entering each water guide channel 40 will then be guided to flow out through the water outlets 401. It is noted that, in addition to the water flow guided by the curved structure of each water guide channel 40 in the tangential direction (T) and the pressure drop of the water flow, the output water flow will also be guided by the conical surface 512 of the flow draining plate 51 of the mounting unit 5, such that the coffee powder below will be provided with brewing water in the form of downward vortex flow.

Compared with conventional water supply systems that only provide a downward water flow, the vortex water flow in the disclosure can induce a more rapid stirring of the coffee powder, making the extraction process more even and efficient. This provides the benefit of allowing the coffee machine to use less powder while achieving the same level of extraction and obtaining the same taste due to the coffee powder being stirred more evenly when the vortex flow agitates the coffee powder. Additionally, the water outlet 401 offers a much larger passageway for the coffee grounds in the coffee liquid mix, making it less probable for the grounds to clog the outlet when the pressure in the coffee maker is released. The coffee machine is therefore simpler to clean after brewing, since the coffee grounds are less likely to remain in the structural crevices of the coffee machine. Additionally, repeated extraction of spent coffee grounds would not happen in subsequent brewings, the variables of each brewing are easier to manage, and the flavor would not be adversely impacted, thereby improving the brewing process and the quality of the brew.

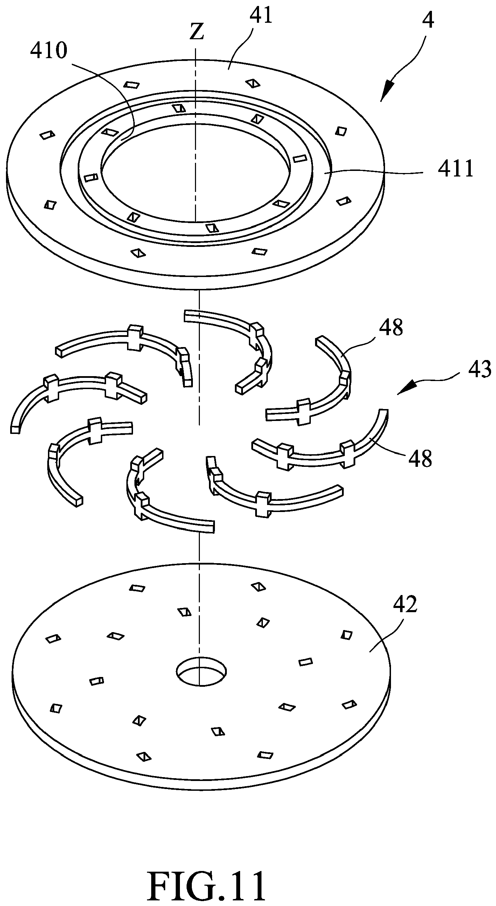

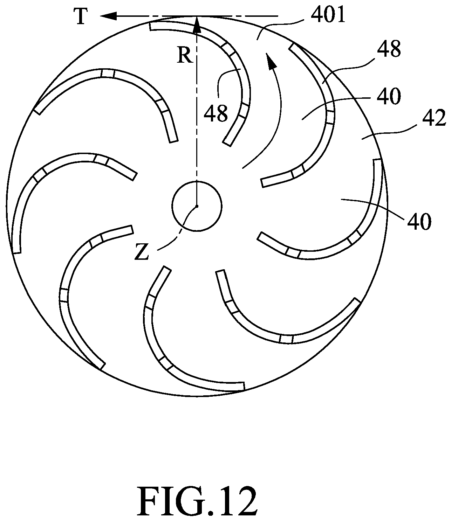

As shown in Figures 11 and 12, the second embodiment has a structure similar to that of the first embodiment. The main difference between this embodiment and the previous embodiment resides in the structure of the flow channel unit 4. In this embodiment, the at least one flow channel configuration member 43 of the flow channel unit 4 includes a plurality of guide arms 48 disposed around the central axis (Z). Each water guide channel 40 is defined between a respective adjacent pair of the guide arms 48. Compared with the first embodiment, it is more convenient to provide additional water guide channels 40, which increases the area ratio of the water guide channels 40 under the same size of the flow channel unit 4, thereby offering different brewing parameters. With the configuration of each guide arm 48 that extends away from the central axis (Z) and that is curved in the tangential direction (T), the water flow can be directed tangentially to the flow channel unit 4 when entering each water guide channel 40, thereby achieving the same effect as the first embodiment.

To sum up, by virtue of the synergy between the flow channel unit 4 and the conical surface 512 of the flow draining plate 51 of the mounting unit 5, the water flow will transform into a downstream vortex flow and produce a uniform stirring effect on the coffee powder located downstream. The brewing quality is thus optimized and additionally, the machine is easier to clean and reverse clogging of the coffee grounds is unlikely to happen. Therefore, the object of the present disclosure can be achieved indeed.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A water distributing device adapted for use in a coffee machine, **characterized by**:
a body housing (3) including a bottom wall (31) that has a water intake (310) passing therethrough along a central axis (Z), and a surrounding wall (32) that extends from a periphery of said bottom wall (31) and that cooperates with said bottom wall (31) to define a water entry space (300); and
a round-contoured flow channel unit (4) disposed downstream of said body housing (3) and defining a plurality of water guide channels (40) that are in fluid communication with said water intake (310), each water guide channel (40) extending away from said central axis (Z) in a radial direction (R) that is perpendicular to said central axis (Z), being curved in a tangential direction (T) that is perpendicular to said central axis (Z) and said radial direction (R), and having a water outlet (401) that is located away from said central axis (Z).

2. The water distributing device as claimed in Claim 1, **characterized in that** said flow channel unit (4) includes:
a cover plate (41) abutting against said bottom wall (31) of said body housing (3);
a bottom plate (42) disposed under said cover plate (41); and
at least one channel configuration member (43) disposed between said cover plate (41) and said bottom plate (42) and cooperating with said cover plate (41) and said bottom plate (42) to define said water guide channels (40), said cover plate (41) defining a water dispensing port (410) that is disposed between and in fluid communication with said water intake (310) and said water guide channels (40).

3. The water distributing device as claimed in Claim 2, **characterized in that** said at least one channel configuration member (43) of said flow channel unit (4) is a configuration plate (46) having a plurality of hook sections (47) that are disposed around said central axis (Z).

4. The water distributing device as claimed in Claim 2, **characterized in that** said at least one channel configuration member (43) of said flow channel unit (4) includes a plurality of angularly spaced-apart guide arms (48) disposed around said central axis (Z) .

5. The water distributing device as claimed in any one of Claims 2 to 4, **characterized in that**:
said bottom wall (31) of said body housing (3) further has a first annular groove (312) that is formed in a side thereof opposite to said water entry space (300) and that surrounds said water intake (310) ;
said cover plate (41) of said flow channel unit (4) has a second annular groove (411) that is formed in a side thereof facing said bottom wall (31) and that is in registration with said first annular groove (312); and
said flow channel unit (4) further includes a water sealing ring (44) that is disposed within said first annular groove (312) and said second annular groove (411) to form a watertight seal between said body housing (3) and said flow channel unit (4).

6. The water distributing device as claimed in any one of Claims 1 to 5, **characterized in that** said bottom wall (31) of said body housing (3) further has a first engaging recess (311) that is formed in a side thereof opposite to said water entry space (300) and that is engaged with said flow channel unit (4) .

7. The water distributing device as claimed in any one of Claims 1 to 6, **characterized by** a mounting unit (5) positioned downstream of said flow channel unit (4), and including a flow draining plate (51), a bolt (52) protruding from said flow draining plate (51) through said water intake (310) into said water entry space (300), and a threaded component (53) connected threadedly to said bolt (52) and restraining said flow channel unit (4) between said flow draining plate (51) and said bottom wall (31).

8. The water distributing device as claimed in Claim 7, **characterized in that** said flow draining plate (51) of said mounting unit (5) has a top surface (511) facing said flow channel unit (4) and a conical bottom surface (512) connected to a periphery of said top surface (511) and tapering downwardly.

9. The water distributing device as claimed in Claim 8, **characterized in that** said flow draining plate (51) of said mounting unit (5) further has a second engaging recess (513) formed in said top surface (511) and engaged with said flow channel unit (4).

10. The water distributing device as claimed in any one of Claims 7 to 9, **characterized in that** said body housing (3) further includes a flow splitting piece (33) engaged in said water intake (310), said threaded component (53) abutting against said flow splitting piece (33), said flow splitting piece (33) has a through hole (330) extending therethrough, and a plurality of slots (330) being in fluid communication with said water guide channels (40), said bolt (52) extending through said through hole (330) of said flow splitting piece (33).
